# EUROPÄISCHE PATENTSCHRIFT

(11) **EP 3 714 175 B1**
(45) Veröffentlichungstag und Bekanntmachung des Hinweises auf die Patenterteilung: **13.01.2021**
(21) Anmeldenummer: 19706443.9
(22) Anmeldetag: 13.02.2019
(51) Int. Cl.: F16C 7/02, F16B 7/02, F16B 7/04, F16B 7/18, F16B 17/00

(54) **VERBINDUNGSHÜLSE, ZUG-DRUCK-STANGE UND VERFAHREN ZUR HERSTELLUNG EINER ZUG-DRUCK-STANGE**
CONNECTING SLEEVE, PUSH-PULL ROD AND METHOD FOR PRODUCING A PUSH-PULL ROD
DOUILLE DE RACCORDEMENT, BARRE DE TRACTION-COMPRESSION ET PROCÉDÉ POUR LA FABRICATION D'UNE BARRE DE TRACTION-COMPRESSION

(43) Veröffentlichungstag der Anmeldung: 30.09.2020
(73) Patentinhaber: GMT Gummi-Metall-Technik GmbH, 77815 Bühl (DE)
(72) Erfinder: UHL, Albert, 77815 Bühl (DE)
(74) Vertreter: Mertzlufft-Paufler, Cornelius
(86) Internationale Anmeldenummer: PCT/EP2019/053595
(87) Internationale Veröffentlichungsnummer: WO 2020/164704

(56) Entgegenhaltungen:
- EP-A2- 1 588 975
- EP-A2- 2 607 229
- WO-A1-2014/195868

## Beschreibung

Die Erfindung betrifft eine Verbindungshülse geeignet zur Herstellung einer Zug-Druck-Stange, mit einem Grundkörper, einem außenumfangseitig am Grundkörper ausgebildeten oder angeordneten Kupplungsabschnitt und einer Durchgangsbohrung.

Die Erfindung betrifft weiter eine Zug-Druck-Stange mit wenigstens einer Verbindungshülse und einem Rohrkörper, der innenumfangseitig wenigstens einen zum Kupplungsabschnitt der Verbindungshülse korrespondierenden Gegenkupplungsabschnitt aufweist, wobei die wenigstens eine Verbindungshülse und der Rohrkörper in einem durch den Kupplungsabschnitt und den Gegenkupplungsabschnitt gebildeten Kontaktbereich miteinander in Kontakt treten.

Die Erfindung betrifft zudem eine Verwendung einer Verbindungshülse zur Herstellung einer Zug-Druck-Stange.

Die Erfindung betrifft außerdem ein Verfahren zur Herstellung einer Zug-Druck-Stange.

Schließlich betrifft die Erfindung eine Verwendung einer Zug-Druck-Stange als Bauteil in einem Flugzeug.

Verbindungshülsen eingangs genannter Art und Zug-Druck-Stangen eingangs genannter Art kommen beispielsweise im Flugzeugbau vielfältig als Aufhängung von Bauteilen und/oder zur Aussteifung von Strukturen, wie dem Rumpf eines Flugzeugs, zum Einsatz.

Insbesondere im Flugzeugbau werden für verschiedenste Anwendungen in den sicherheitsrelevanten Bereichen außerhalb und auch innerhalb der Kabine Bauteile benötigt, die störungsfrei und ausfallsicher über einen sehr langen Zeitraum ohne Wartung funktionieren.

In Bezug auf die Zug-Druck-Stangen bedeutet dies, dass diese in sehr engen auf einander folgenden Intervallen vorsorglich gewartet werden müssen und nach einer relativ kurzen Einsatzdauer routinemäßig ausgetauscht oder wenigstens im Zuge der Wartung ausgebaut, zerlegt, geprüft und erneut eingebaut werden müssen. Diese Tätigkeiten sind mit einem enormen Zeit- und Kostenaufwand verbunden.

Häufig kommen gerade im Flugzeugbau Zug-Druck-Stangen zum Einsatz, die aus wenigstens zwei unterschiedlichen Metallen gefertigt sind. Beispielsweise kennt man Zug-Druck-Stangen mit einem Rohrkörper, der häufig aus Aluminium besteht und Verbindungshülsen, die aus Edelstahl gefertigt sind. Aufgrund der vorgenannten Kombination eines edlen Metalls mit einem weniger edlen Metalls kommt es im Kontaktbereich der unterschiedlichen Metalle zu einer elektrochemischen Reaktion zwischen den metallischen Werkstoffen, sobald ein als Elektrolyt wirkendes Korrosionsmedium in den Kontaktbereich eindringt. Durch die elektrochemische Reaktion kommt es schließlich zu einer so genannten Bimetallkorrosion, die auch unter den Begriffen Kontaktkorrosion und galvanische Korrosion bekannt ist. Aufgrund unterschiedlicher Elektrodenpotentiale baut sich eine elektrische Spannung zwischen den metallischen Werkstoffen auf, sodass Elektronen der Atome des weniger edlen Metalls in das edlere Metall wandern und von dort aus zu einer Reaktion mit dem Elektrolyten führen. Infolgedessen kommt es zur Oxidation und Zerstörung des Werkstoffs aus dem weniger edlen Metall.

Das Korrosionsmedium ist in der Regel eine Flüssigkeit, wie beispielsweise Wasser mit gelösten Salzen. Tritt im Kontaktbereich der beiden unterschiedlich edlen Metalle Feuchtigkeit auf, so besteht die Gefahr des Auftretens einer Bimetallkorrosion. Insbesondere bei Flugzeugen ist es aufgrund der großen Temperaturdifferenzen, welchen das Flugzeug während des Betriebs ausgesetzt ist, nicht möglich, die Bildung von Kondenswasser an den Zug-Druck-Stangen zu vermeiden.

Um das Auftreten von Bimetallkorrosion bei Zug-Druck-Stangen besser vermeiden zu können, ist es üblich geworden, wenigstens die Bauteile der Zug-Druck-Stangen, die zur Korrosion neigen, mit einer Oberflächenbeschichtung zu versehen. Ein wesentlicher Nachteil der zur Zeit bekannten Oberflächenbeschichtungen, die dazu geeignet sind, Bimetallkorrosion zu verhindern und insbesondere im Flugzeugbau eingesetzt zu werden, besteht darin, dass diese häufig auf giftige und/oder umweltschädliche Stoffe zurückgreifen. Beispielsweise kennt man anodische oder chemische Verfahren zur Passivierung. Diese Verfahren basieren jedoch beispielsweise auf Kadmium und Chrom-VI-Verbindungen (CrO₃; Cr6), die als kritische Gefahrenstoffe eingestuft sind und deren Verwendung nicht zuletzt aufgrund der REACH Verordnung der Europäischen Union zukünftig vermieden werden soll, um die menschliche Gesundheit und die Umwelt vor Risiken zu schützen. Ohne die genannten Stoffe ist man derzeit jedoch nicht in der Lage, heutige Anforderungen an den Korrosionsschutz zu erfüllen.

WO 2014/195868 offenbart eine Zug-Druck-Stange, wobei ein Kontaktbereich zwischen der Verbindungshülse und dem Rohrkörper nach außen nicht abgedichtet ist, so dass es hier zu einer Bimetallkorrosion kommt, wenn Feuchtigkeit in den Kontaktbereich eintritt.

Es besteht somit die Aufgabe, eine Verbindungshülse zur Herstellung einer Zug-Druck-Stange und/oder eine Zug-Druck-Stange bereitzustellen, bei welcher/n die zuvor genannten Nachteile ausgeräumt sind.

Die Lösung dieser Aufgabe wird erfindungsgemäß durch eine Verbindungshülse eingangs genannter Art mit den Merkmalen nach Anspruch 1 bereitgestellt. Erfindungsgemäß wird zur Lösung der vorgenannten Aufgabe eine Verbindungshülse eingangs genannter Art vorgeschlagen, wobei die Verbindungshülse eine wenigstens teilweise außenumfangseitig angeordnete erste Dichtung und eine wenigstens die Durchgangsbohrung verschließende zweite Dichtung aufweist, wobei die erste Dichtung und die zweite Dichtung wenigstens teilweise aus einem elastischen Material hergestellt sind. Somit kann durch die beiden Dichtungen verhindert werden, dass in Montagestellung (Gebrauchsstellung) der Verbindungshülse, bei welcher diese mit einem weiteren Bauteil der Zug-Druck-Stange verbunden ist, Feuchtigkeit in den Kontaktbereich der Verbindungshülse mit dem weiteren Bauteil eindringt. Beispielsweise kann die Verbindungshülse in einen Rohrkörper (weiteres Bauteil) eingesetzt werden. Dies hat den Vorteil, dass Zug-Druck-Stangen, die mit der erfindungsgemäßen Verbindungshülse hergestellt sind, deutlich langlebiger als vorbekannte Zug-Druck-Stangen sind, da im Kontaktbereich keine Bimetallkorrosion auftritt. Darüber hinaus hat die erfindungsgemäße Verbindungshülse den Vorteil, dass auf eine Oberflächenbeschichtung der Verbindungshülse oder weiterer Bauteile, die gegebenenfalls giftige und/oder umweltschädliche Stoffe enthalten, verzichtet werden kann.

Nachfolgend werden vorteilhafte Ausgestaltungen der Erfindung beschrieben, die allein oder in Kombination mit den Merkmalen anderer Ausgestaltungen optional zusammen mit den Merkmalen nach Anspruch 1 kombiniert werden können.

Die beiden Dichtungen können als separate Bauteile ausgestaltet sein. Insbesondere kann es vorgesehen sein, dass durch die beiden Dichtungen eine hermetische und/oder flüssigkeitsdichte Abdichtung eingerichtet oder einrichtbar ist, insbesondere eines in Montagestellung vorliegenden Kontaktbereichs zwischen der Verbindungshülse und dem weiteren Bauteil.

Um eine besonders gute und langlebige Abdichtung des Kontaktbereichs ausbilden zu können, sind die erste Dichtung und die zweite Dichtung wenigstens teilweise aus einem elastischen Material hergestellt. Beispielsweise kann es sich bei dem elastischen Material um Gummi und/oder um ein thermoplastisches Elastomer handeln.

Dabei kann es vorgesehen sein, dass die erste Dichtung als ein Dichtring ausbildet ist, der durchgehend umlaufend um den Außenumfang des Grundkörpers der Verbindungshülse angeordnet ist. Dies hat den Vorteil, dass durch die erste Dichtung ein in Gebrauchsstellung vorliegender erster Zugang zum Kontaktbereich besser abdichtbar ist. Beispielsweise kann somit in Montagestellung ein Spalt zwischen einer Außenwandung des Grundkörpers und einem weiteren Bauteil einer Zug-Druck-Stange, wie zum Beispiel dem bereits genannten Rohrkörper, abgedichtet werden. Die erste Dichtung kann somit in Montagestellung eine axiale und/oder radiale Abdichtung ausbilden.

Gemäß einer Ausgestaltungsvariante der zweiten Dichtung kann diese als ein Stopfen ausgebildet sein, der einen in die Durchgangsbohrung eingeführten Teil und einen aus der Durchgangsbohrung herausragenden Teil aufweist. Dies hat den Vorteil, dass durch die zweite Dichtung ein in Gebrauchsstellung vorliegender zweiter Zugang zum Kontaktbereich besser abdichtbar ist. Beispielsweise kann mittels des Stopfens einerseits die Durchgangsbohrung verschlossen und andererseits ein in Gebrauchsstellung vorliegender Spalt zwischen dem Grundkörper der Verbindungshülse und dem weiteren Bauteil, wie dem Rohrkörper, abgedichtet werden. Vorzugsweise kann der Stopfen wenigstens teilweise konisch und/oder sich in Einführungsrichtung verjüngend ausgebildet sein. Somit ist es einfacher, den Stopfen während der Montage durch einen zum Kupplungsabschnitt der Verbindungshülse korrespondierenden Gegenkupplungsabschnitt zu schieben. Die zweite Dichtung kann in Montagestellung somit eine axiale und/oder radiale Abdichtung ausbilden.

Gemäß einer vorteilhaften Weiterbildung der Verbindungshülse können eine erste Öffnung der Durchgangsbohrung offen und eine zweite Öffnung der Durchgangsbohrung durch die zweite Dichtung verschlossen sein. Beispielsweise kann durch die erste Öffnung ein Zugang zu einer, vorzugsweise innenumfangseitig ausgebildeten oder angeordneten Kupplungsstelle ausgebildet sein. Die Kupplungsstelle kann dazu dienen, um eine Verbindung der Verbindungshülse mit einem weiteren Bauteil einer Zug-Druck-Stange herstellen zu können. Beispielsweise kann die Kupplungsstelle als ein Aufnahmegewinde für Edelstahlenden ausgebildet sein.

Um eine besonders gute Abdichtung eines in Montagestellung der Verbindungshülse auftretenden Spalts zwischen dem Grundkörper der Verbindungshülse und einem Rohrkörper zu erreichen, kann ein maximaler Außendurchmesser der zweiten Dichtung größer als ein maximaler Außendurchmesser eines Endabschnitts des Grundkörpers sein, vorzugsweise in welchen die zweite Dichtung eingeführt ist. Insbesondere kann der maximale Außendurchmesser an einem freien Ende des Grundkörpers geringer als ein maximaler Außendurchmesser der zweiten Dichtung sein.

Gemäß einer vorteilhaften Weiterbildung der Verbindungshülse kann die erste Dichtung einen sich radial nach außen verjüngenden Querschnitt aufweisen. Insbesondere kann die erste Dichtung einen trapezförmigen Querschnitt aufweisen. Die erste Dichtung kann somit in vorgespanntem Zustand (Montagestellung) wenigstens teilweise in einer am Grundkörper ausgebildeten Hinterschneidung einklemmbar oder eingeklemmt sein. Dies hat den Vorteil, dass somit besser verhindert werden kann, dass Feuchtigkeit an der Dichtung vorbei in den Kontaktbereich gelangen kann. Durch die Hinterschneidung kann die Dichtung in vorgespanntem Zustand besser an die Außenkontur des Grundkörpers und an das weitere Bauteil angepresst werden.

Gemäß einer vorteilhaften Ausgestaltungsvariante der Verbindungshülse kann der Kupplungsabschnitt wenigstens teilweise als ein Außengewinde ausgebildet sein. Dies hat den Vorteil, dass mittels des Außengewindes eine besonders gute axiale Sicherung der Verbindungshülse in Montagestellung erreicht wird.

Gemäß einer weiteren vorteilhaften Ausgestaltung kann der Grundkörper aus wenigstens einem Metall hergestellt sein. Beispielsweise kann der Grundkörper aus einem oder einer Kombination von mehreren Metallen ausgewählt aus der Gruppe wenigstens aus Edelstahl, Titan und/oder Aluminium hergestellt sein.

Um eine ungewollte Torsion der Verbindungshülse relativ zu einem mit der Verbindungshülse verbundenen Bauteil, wie beispielsweise dem Rohrkörper, besser vermeiden zu können, kann am Außenumfang des Grundkörpers ein Verdrehsicherungsabschnitt ausgebildet oder angeordnet sein, wobei ein maximaler Außendurchmesser im Bereich des Verdrehsicherungsabschnitts größer als im Bereich des Kupplungsabschnitts ausgebildet ist.

Alternativ oder ergänzend dazu kann gemäß einer weiteren vorteilhaften Ausgestaltung der Verbindungshülse vorgesehen sein, dass die Verbindungshülse einen Sicherungsring zur Einrichtung einer Verdrehsicherung aufweist, welcher außenumfangseitig um den Grundkörper herum, insbesondere in einem Verdrehsicherungsabschnitt, beispielsweise dem zuvor genannten Verdrehsicherungsabschnitt, angeordnet ist. Der Sicherungsring kann Laschen aufweisen, die in Montagestellung der Verbindungshülse eine Rastverbindung wenigstens mit einer Raststruktur am Grundkörper und/oder einer Innenwandung eines weiteren Bauteils ausbilden. Die Raststruktur kann beispielsweise durch ein Rändel ausgebildet sein.

Der Verdrehsicherungsabschnitt kann der Kupplungsstelle in Einführungsrichtung vorgelagert sein und/oder durch die beiden Dichtungen abdichtbar sein.

Die zuvor genannte Aufgabe wird weiter durch eine Zug-Druck-Stange eingangs genannter Art mit den Merkmalen des auf eine Zug-Druck-Stange gerichteten Anspruchs 7 gelöst. Insbesondere wird zur Lösung der Aufgabe eine Zug-Druck-Stange eingangs genannter Art mit wenigstens einer Verbindungshülse, wie sie hierin beschrieben beansprucht ist, und einem Rohrkörper vorgeschlagen, wobei der Rohrkörper innenumfangseitig wenigstens einen zum Kupplungsabschnitt der Verbindungshülse korrespondierenden Gegenkupplungsabschnitt aufweist, wobei die wenigstens eine Verbindungshülse und der Rohrkörper in einem durch den Kupplungsabschnitt und den Gegenkupplungsabschnitt gebildeten Kontaktbereich in Montagestellung miteinander in Kontakt treten, und wobei der Kontaktbereich nach außen abgedichtet ist. Insbesondere ist im Kontaktbereich ein direkter Kontakt hergestellt. Wie bereits in Bezug auf die Verbindungshülse beschrieben, kann somit verhindert werden, dass Feuchtigkeit in den Kontaktbereich eintritt und es infolgedessen zu einer Bimetallkorrosion der Verbindungshülse und/oder des Rohrkörpers kommt. Zudem kann, wie bereits zuvor erläutert, auf Oberflächenbeschichtungen der Verbindungshülse und/oder des Rohrkörpers verzichtet werden. Darüber hinaus gelten in Bezug auf die Zug-Druck-Stange die gleichen Vorteile, wie sie hierin bereits in Bezug auf die Verbindungshülse zuvor beschrieben wurden.

Nachfolgend werden vorteilhafte Ausgestaltungen der Erfindung beschrieben, die allein oder in Kombination mit den Merkmalen anderer Ausgestaltungen optional zusammen mit den Merkmalen nach Anspruch kombiniert werden können.

Erfindungsgemäß erfolgt die Abdichtung des Kontaktbereichs durch die erste Dichtung und die zweite Dichtung.

Um jegliche oder nahezu jegliche Kontaktkorrosion zwischen unterschiedlich edlen Metallen zu vermeiden, kann die Zug-Druck-Stange derart ausgestaltet sein, dass außerhalb des abgedichteten Kontaktbereichs kein direkter Kontakt zwischen der Verbindungshülse und dem Rohrkörper vorliegt. Dies hat den Vorteil, dass ein direkter Kontakt der Verbindungshülse mit dem Rohrkörpers ausschließlich im Kontaktbereich vorliegt und dadurch die Gefahr einer Korrosion eingedämmt ist. Als direkter Kontakt kann verstanden werden, dass keine dazwischen liegenden Stoffe, Schichten und/oder Bauteile vorgesehen sind.

Im Flugzeugbau kommt es häufig vor, dass Zug-Druck-Stangen verwendet werden, bei welchen die Verbindungshülse und der Rohrkörper aus unterschiedlichen Metallen, insbesondere unterschiedlich edlen Metallen, hergestellt sind. Beispielsweise können diese jeweils aus wenigstens einem Metall ausgewählt aus der Gruppe wenigstens aus Edelstahl, Titan und/oder Aluminium hergestellt sein. Nun ist es aufgrund der Erfindung erstmals möglich, diese Art der Materialkombination auch ohne vor Korrosion schützende Oberflächenbeschichtung einzusetzen.

Um eine besonders gute Abdichtung des Kontaktbereichs zu erreichen, kann ein maximaler Außendurchmesser der zweiten Dichtung breiter als ein minimaler Innendurchmesser des Gegenkupplungsabschnitts des Rohrkörpers ausgestaltet sein. Alternativ oder ergänzend dazu kann der maximale Außendurchmesser der zweiten Dichtung breiter als ein Innendurchmesser einer in Einführungsrichtung der Verbindungshülse in den Rohrkörper dem Gegenkupplungsabschnitt nachgelagerten Kernlochbohrung des Rohrkörpers ausgestaltet sein. Somit ist es möglich, dass die zweite Dichtung mit ihrer lateralen Dichtfläche eine Innenwandung des Rohrkörpers, insbesondere der Kernlochbohrung, im Montagestellung beaufschlagt und somit einen Spalt zwischen dem Rohrkörpers und der Verbindungshülse abdichtet. Darüber hinaus ist die zweite Dichtung so ausgelegt, dass sie sich unter leichter Deformation durch den Gegenkupplungsabschnitt des Rohrkörpers einführen, insbesondere einschrauben, lässt. Die zweite Dichtung kann weiter so ausgelegt sein, dass sie in Montagestellung auf ein vordefiniertes Maß vorgespannt ist, um eine besonders gute Abdichtung des Spalts zu ermöglichen.

Gemäß einer Ausgestaltungsvariante der Zug-Druck-Stange kann der Gegenkupplungsabschnitt wenigstens teilweise als ein Innengewinde ausgebildet sein. Das Innengewinde kann zu dem an der Verbindungshülse ausgestalteten Außengewinde korrespondierend ausgestaltet sein. Somit ist es möglich, die Verbindungshülse in den Rohrkörpers einzuschrauben, um die beiden miteinander zu verbinden und axial zu sichern.

Um eine ungewollte Verdrehung der Verbindungshülse relativ zum Rohrkörpers zu verhindern, kann am Innenumfang des Rohrkörpers ein in Montagestellung den Verdrehsicherungsabschnitt der Verbindungshülse wenigstens teilweise beaufschlagender Reibungsabschnitt ausgebildet sein. Insbesondere kann dabei vorgesehen sein, dass ein maximaler Außendurchmesser des Verdrehsicherungsabschnitts größer als ein minimaler Innendurchmesser des Reibungsabschnitts ausgestaltet ist. Somit ist es möglich, eine Presspassung auszubilden, um eine Verdrehung zu verhindern, sobald die beiden Bauteile montiert sind. Alternativ oder ergänzend dazu kann der Verdrehsicherungsabschnitt wenigstens teilweise als ein Konus ausgebildet sein. Der Konus kann Teil des Außenumfangs des Grundkörpers sein. Durch Einführen der Verbindungshülse in den Rohrkörpers ist es somit möglich, eine Hemmung einzurichten, indem ein Kegelmantel des Konus in Montagestellung wenigstens teilweise gegen den Reibungsabschnitt gedrückt wird. Ein Grad der Hemmung kann hierbei durch Einstellung eines Winkels des Konus erreicht werden. Vorzugsweise beträgt der Winkel 1:5. Der Kontaktbereich kann sich vorzugsweise über den Bereich des Verdrehsicherungsabschnitts und des Reibungsabschnitts erstrecken.

Um einen optimalen Sitz der ersten Dichtung in Montagestellung zu erreichen, um eine besonders gute Abdichtung des Kontaktbereichs der Zug-Druck-Stange zu gewährleisten, kann die erste Dichtung in Montagestellung zwischen einer Hinterschneidung, beispielsweise der zuvor genannten Hinterschneidung, der Verbindungshülse und einer Stirnfläche des Rohrkörpers eingeklemmt sein. Beispielsweise kann eine Anlagefläche der Hinterschneidung und/oder die Stirnfläche des Rohrkörpers wenigstens teilweise schräg zu einer Längsachse des Rohrkörpers ausgerichtet sein, um die zweite Dichtung noch besser gegen eine Außenwandung des Grundkörpers der Verbindungshülse zu pressen und um die zweite Dichtung auf ein bestimmtes Maß vorzuspannen.

Um eine bestimmte Position der Verbindungshülse relativ zum Rohrkörper in Montagestellung einstellen und/oder um ein Maß einer Vorspannung wenigstens einer der Dichtungen besser definieren zu können, kann der Rohrkörper einen Anschlag aufweisen, an welchem in Montagestellung ein an der Verbindungshülse ausgebildeter Gegenanschlag anliegt und durch welchen eine maximale Einsetztiefe der Verbindungshülse in den Rohrkörper und/oder eine Vorspannung der ersten Dichtung definiert ist. Der Anschlag kann vorzugsweise an einer Innenwandung des Rohrkörpers ausgebildet sein.

Um eine ungewollte Torsion der Verbindungshülse zum Rohrkörpers in montierten Zustand zu verhindern, kann die wenigstens eine Verbindungshülse durch ein Fixierungsmittel fest mit dem Rohrkörper verbunden sein. Insbesondere kann das Fixierungsmittel dazu eingerichtet sei, dass keine Bewegung der Verbindungshülse relativ zum Rohrkörper möglich ist. Beispielsweise kann mittels des wenigstens einen Fixierungsmittels eine kraftschlüssige und/oder formschlüssige und/oder stoffschlüssige Verbindung ausgebildet sein.

Beispielsweise kann ein Fixierungsmittel, beispielsweise das zuvor bereits genannte Fixierungsmittel durch den Verdrehsicherungsabschnitt und den daran wenigstens teilweise anliegenden Reibungsabschnitt ausgebildet sein. Alternativ oder ergänzend dazu kann vorgesehen sein, dass das Fixierungsmittel als eine durch einen, insbesondere anaerob aushärtenden, Klebstoff ausgebildete Verklebung des Kupplungsabschnitts und des Gegenkupplungsabschnitts ausgebildet ist.

Die oben genannte Aufgabe wird weiter durch eine Verwendung gemäß des Verwendungsanspruchs 13, einer Verbindungshülse, wie sie hierin beschrieben und beansprucht ist, zur Herstellung einer Zug-Druck-Stange, insbesondere wie sie hierin und beansprucht ist, gelöst.

Schließlich wird die oben genannte Aufgabe durch ein Verfahren zur Herstellung einer Zug-Druck-Stange, wie sie hierin beschrieben und beansprucht ist, mit den Merkmalen gemäß des unabhängigen Verfahrensanspruchs 14 gelöst, wobei eine Verbindungshülse, wie sie hierin beschrieben und beansprucht ist, in einer Einführungsrichtung in einen Rohrkörper eingesetzt und mit diesem fest verbunden wird, wobei eine erste Dichtung einen Kontaktbereich an einer dem Kontaktbereich in Einführrichtung vorgelagerter Stelle abdichtet, wobei eine zweite Dichtung der Verbindungshülse beim Einführen der Verbindungshülse in den Rohrkörper durch einen innenumfangseitig am Rohrkörper ausgebildeten Gegenkupplungsabschnitt hindurchgeführt wird, und wobei durch die zweite Dichtung eine Abdichtung des Kontaktbereichs an einer dem Kontaktbereich in Einführrichtung nachgelagerten Stelle erfolgt.

Die oben genannte Aufgabe wird weiter durch eine Verwendung gemäß des Verwendungsanspruchs 15, einer Zug-Druck-Stange, wie sie hierin beschrieben und beansprucht ist, als Bauteil in einem Flugzeug gelöst. Wie bereits zuvor beschrieben, eignet sich die beschriebene Zug-Druck-Stange besonders dazu, um auch bei widrigen Verhältnissen und/oder bei hohen Temperaturdifferenzen eingesetzt zu werden, ohne dass Bimetallkorrosion im Kontaktbereich auftritt. Somit sind seltener Wartungen und/oder ein Ersatz der Zug-Druck-Stangen erforderlich.

Die Erfindung wird nun anhand mehrerer Ausführungsbeispiele näher beschrieben, ist jedoch nicht auf diese Ausführungsbeispiele beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele, die unter den beanspruchten Schutzbereich fallen.

Es zeigt:
- Fig. 1: eine erste mögliche Ausführungsvariante einer Verbindungshülse und/oder einer Zug-Druck-Stange in mehreren Ansichten, wobei die Verdrehsicherung durch einen selbsthemmenden Konus ausgebildet ist,
- Fig. 2: eine zweite mögliche Ausführungsvariante einer Verbindungshülse und/oder einer Zug-Druck-Stange in mehreren Ansichten, wobei die Verdrehsicherung durch eine Presspassung ausgebildet ist,
- Fig. 3: eine dritte mögliche Ausführungsvariante einer Verbindungshülse und/oder einer Zug-Druck-Stange in mehreren Ansichten, wobei die Verdrehsicherung durch eine Rastverbindung zwischen einem Sicherungsring, einer am Grundkörper der Verbindungshülse ausgebildeten Raststruktur und einer Innenwandung des Rohrkörpers ausgebildet ist,
- Fig. 4: eine vierte mögliche Ausführungsvariante einer Verbindungshülse und/oder einer Zug-Druck-Stange in mehreren Ansichten, wobei die Verdrehsicherung durch ein formschlüssiges Umformen des Rohrkörpers ausgebildet ist.

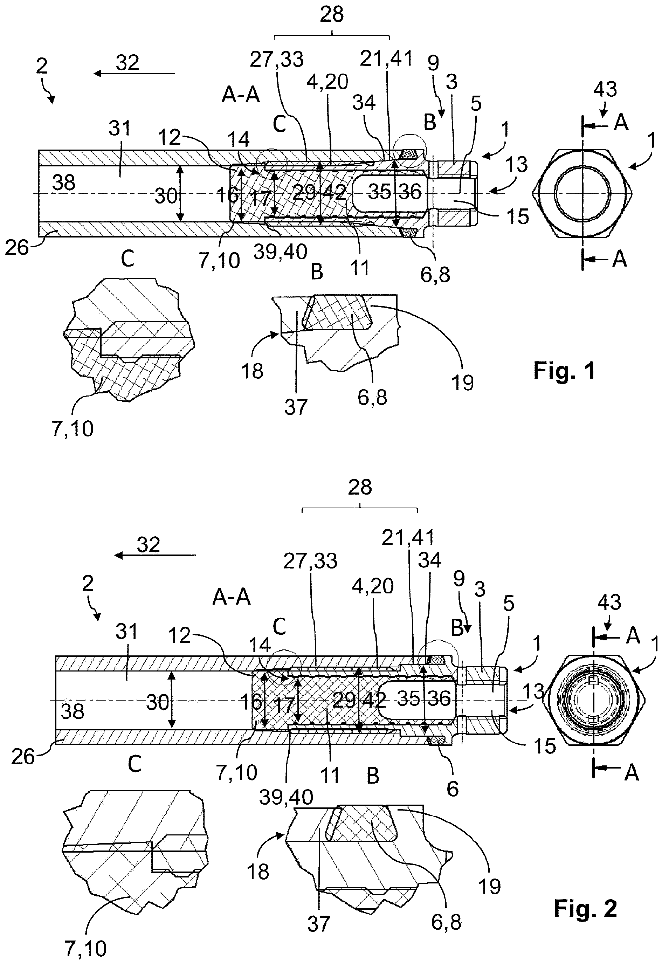

In den Figuren 1-4 sind vier unterschiedliche Ausführungsvarianten einer Verbindungshülse 1 dargestellt, die zusammen mit einem jeweiligen Rohrkörper 26 eine Zug-Druck-Stange 2 bilden. Die dargestellten Ausführungsvarianten der Zug-Druck-Stangen 2 bzw. der Verbindungshülsen 1 unterscheiden sich im Wesentlichen dadurch, dass eine Verdrehsicherung zwischen der Verbindungshülse 1 und dem Rohrkörper 26 bei den Ausführungsvarianten durch unterschiedliche Fixierungsmittel 41 verwirklicht ist, worauf nachfolgend noch im Detail eingegangen wird.

Die Gemeinsamkeiten der Verbindungshülsen 1 und/oder der Zug-Druck-Stangen 2 werden nachfolgend in Bezug auf die Figuren 1-4 genauer beschrieben.

Die Verbindungshülse 1, wie sie in den Figuren 1-4 jeweils gezeigt ist, eignet sich zur Herstellung einer Zug-Druck-Stange 2, die wiederum dazu geeignet ist, um Kräfte aufzunehmen und/oder zu übertragen.

Die Verbindungshülse 1 weist einen Grundkörper 3 auf, der an seinem Außenumfang 9 einen Kupplungsabschnitt 4 aufweist. Mittels des Kupplungsabschnitts 4 ist es möglich, eine Kopplung zwischen Verbindungshülse 1 und Rohrkörper 26 herzustellen.

Die Verbindungshülse 1 weist weiter eine durch den Grundkörper 3 verlaufende Durchgangsbohrung 5 auf.

Die Verbindungshülse 1 weist eine wenigstens teilweise um den Außenumfang 9 des Grundkörpers 3 herumlaufende erste Dichtung 6 auf.

Daneben weist die Verbindungshülse 1 eine zweite Dichtung 7 auf, die wenigstens teilweise in die Durchgangsbohrung 5 eingesetzt ist und diese abdichtet.

Die beiden Dichtungen 6,7 sind jeweils aus einem elastischen Material, wie beispielsweise einer Gummimischung und/oder einem thermoplastischen Elastomer, hergestellt, so dass eine insbesondere reversible Verformbarkeit gegeben ist.

Wie es aus den Figuren 1-4 zu entnehmen ist, kann die erste Dichtung 6 beispielsweise als ein Dichtring ausgebildet sein, der durchgehend umlaufend um den Außenumfang 9 des Grundkörpers 3 herum angeordnet ist.

Die zweite Dichtung 7 ist als ein Stopfen 10 ausgebildet, der in einen in die Durchgangsbohrung 5 eingeführten Teil 11 und einen aus der Durchgangsbohrung 5 herausragenden Teil 12 unterteilt ist. Der Stopfen 10 überragt daher den Grundkörper 3 an einem Ende des Grundkörpers 3. Insbesondere überragt der Stopfen 3 den Grundkörper 3 an dem Ende des Grundkörpers 3, mit welchem dieser voran in eine Einführungssichtung 32 während der Montage einer Zug-Druck-Stange 2 in den Rohrkörper 26 eingeführt wird. Der eingeführte Teil 11 dichtet die Durchgangsbohrung 5 ab und der herausragende Teil 12 dichtet in Montagestellung der Verbindungshülse 1 als Teil einer Zug-Druck-Stange einen Spalt zwischen einer Außenwandung des Grundkörpers 3 der Verbindungshülse 1 und einer Innenwandung des Rohrkörpers 26, insbesondere einer Innenwandung einer Kernlochbohrung 31, ab.

Somit ist eine erste Öffnung 13 der Durchgangsbohrung 5 nach außen offen und eine zweite Öffnung der Durchgangsbohrung 5 durch die zweite Dichtung 7 verschlossen. Die erste Öffnung 13 bildet einen Zugang zu einer Kupplungsstelle 15, die beispielsweise als ein Gewinde ausgebildet sein kann. Die Kupplungsstelle 15 dient dazu, die Verbindungshülse 1 mit weiteren Bauteilen verbinden zu können.

Ein maximaler Außendurchmesser 16 der zweiten Dichtung 7 ist breiter als ein maximaler Außendurchmesser 17 eines Endabschnitts des Grundkörpers 3 ausgebildet, in welchen die zweite Dichtung 7 wenigstens teilweise eingeführt ist. Somit liegt eine laterale Dichtfläche der zweiten Dichtung 7 in Montagestellung an einer in Längsrichtung verlaufenden lateralen Innenwandung in der Kernlochbohrung 31 des Rohrkörpers 26 an.

Wie in den Figuren 1B, 2B, 3B und 4B zu erkennen ist, weist die erste Dichtung 6 einen sich radial nach außen hin verjüngenden Querschnitt 18 auf. Bei der dargestellten Ausführungsvariante ist der Querschnitt 18 trapezförmig ausgebildet. Eine Oberseite und eine Unterseite der ersten Dichtung 6 sind somit schräg ausgerichtet. Dies hat den Vorteil, dass die erste Dichtung 6 in Montagestellung, also im vorgespannten Zustand, zwischen einer am Grundkörper 3 ausgebildeten Hinterschneidung 19 und/oder einer am Rohrkörper 26 ausgebildeten Stirnfläche 37 einklemmbar oder eingeklemmt ist. Somit kann ein Verrutschen der ersten Dichtung 6 auch bei der Einwirkung eines Anpressdrucks besser vermieden werden.

Der Kupplungsabschnitt 4 kann, wie in den Figuren 1-4 gezeigt ist, beispielsweise als ein Außengewinde 20 ausgebildet sein. Somit ist es möglich, die Verbindungshülse 1 zur Montage einer Zug-Druck-Stange 2 in ein korrespondierendes Innengewinde 33 einzuschrauben und eine axiale Sicherung in Montagestellung zu erreichen.

Am Außenumfang 9 des Grundkörpers 3 ist ein Verdrehsicherungsabschnitt 21 ausgebildet oder angeordnet. Durch diesen kann vermieden werden, dass es in Montagestellung der Verbindungshülse 1 zu einer Verdrehung der Verbindungshülse 1 relativ zu einem Rohrkörper 26 kommt.

Ein maximaler Außendurchmesser 35 des Grundkörpers 3 im Bereich des Verdrehsicherungsabschnitt 21 ist dabei größer als ein maximaler Außendurchmesser 42 im Bereich des Kupplungsabschnitts 4 ausgebildet, um beispielsweise eine Presspassung und/oder Selbsthemmung der Verbindungshülse 1 innerhalb des Rohrkörper 26 erreichen zu können. Beispiele für diese Ausgestaltungsvariante sind in den Figuren 1 und 2 gezeigt.

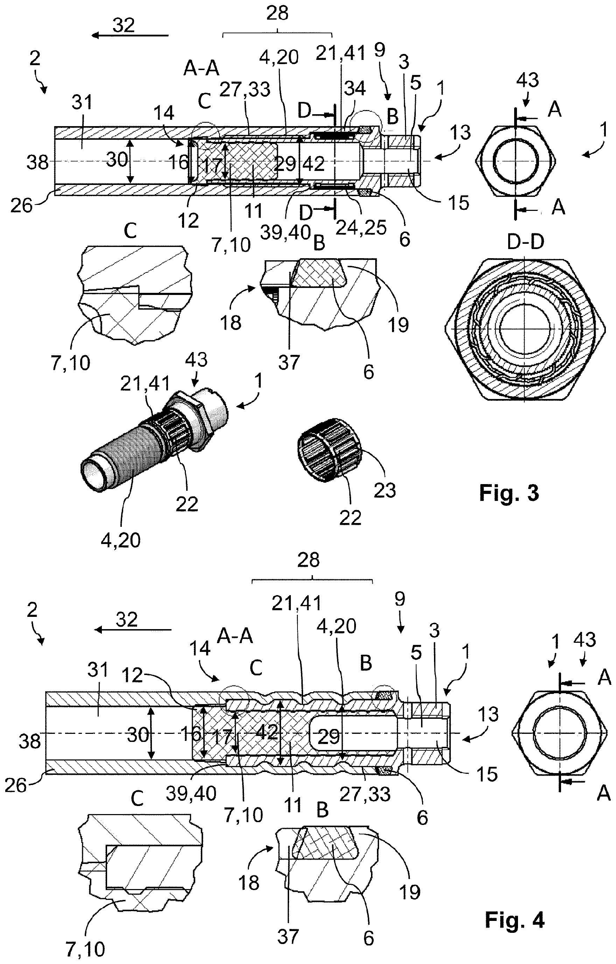

In Figur 3 ist eine Ausführungsvariante mit einem Sicherungsring 22 zur Einrichtung einer Verdrehsicherung dargestellt. Der Sicherungsring 22 weist nach innen und/oder nach außen abstehende Laschen 23 auf, die sich in Montagestellung mit einer Raststruktur 24, die im Verdrehsicherungsabschnitt 21 am Grundkörper 3 beispielsweise als Rändel 25 ausgebildet ist, verhaken. Der Sicherungsring 22 kann beispielsweise aus einem Federstahl hergestellt sein. Durch den Sicherungsring 22 ist es möglich, eine einzige Drehrichtung zu bestimmen, so dass ein Drehen in entgegengesetzte Richtung aufgrund der Laschen 23 nicht möglich ist. Während eines Einschraubvorgangs werden die äußeren Laschen 23 formschlüssig in den Rohrkörper 26 getrieben. Die inneren Laschen 23 werden dabei von der Raststruktur 24 nach außen gedrückt. Somit ist ein Formschluss zwischen der Raststruktur 24, dem Sicherungsring 22 und dem Rohrkörper 26 herstellbar.

In Figur 4 ist eine weitere Ausführungsvariante einer Verbindungshülse 1 und/oder einer Zug-Druck-Stange 2 gezeigt, wobei eine Verdrehsicherung der Verbindungshülse 1 relativ zum Rohrkörper 26 durch eine formschlüssige Umformung des Rohrkörpers 26 auf die Verbindungshülse 1 realisiert ist. Zur Ausbildung der Umformung wird Druck auf eine Außenwand des Rohrkörpers 26 ausgeübt, so dass die Innenwandung des Rohrkörpers 26 in diesen Bereich nach innen gegen die Verbindungshülse 1 gedrückt wird und diese fixiert.

Der Rohrkörper 26 weist innenumfangseitig wenigstens einen zum Kupplungsabschnitt 4 der Verbindungshülse 1 korrespondierenden Gegenkupplungsabschnitt 27 auf. Die Verbindungshülse 1 und der Rohrkörper 6 sind über Kupplungsabschnitt 4 und Gegenkupplungsabschnitt 27 miteinander verbunden und bilden hier einen Kontaktbereich 28 aus. Der Gegenkupplungsabschnitt 27 kann beispielsweise als Innengewinde 33 ausgebildet sein.

Der Kontaktbereich 28 neigt besonders zu Bimetallkorrosion, wenn Feuchtigkeit in diesen gelangt. Um ein Eindringen von Feuchtigkeit verhindern zu können, ist der Kontaktbereich 28 in Montagestellung nach außen hin abgedichtet. Somit kann auf üblicherweise bei Zug-Druck-Stangen ausgebildete Drainageöffnungen verzichtet werden.

Die Abdichtung des Kontaktbereich 28 erfolgt durch die erste Dichtung 6 und die zweite Dichtung 7, durch die sämtliche Zugänge zum Kontaktbereich 28 abgedichtet sind.

Außerhalb des Kontaktbereichs 28 soll es nach Möglichkeit keinen direkten Kontakt zwischen metallischen Teilen der Verbindungshülse 1 und des Rohrkörpers 26 geben, um elektrochemische Reaktionen zwischen den beiden zu vermeiden.

Die Verbindungshülse 1, insbesondere der Grundkörper 3 der Verbindungshülse 1, und der Rohrkörper 26 sind aus unterschiedlichen Metallen gefertigt. Beispiele hierfür können sein: Edelstahl, Titan und/oder Aluminium. Eine Ausgestaltung der Zug-Druck-Stange 2 kann vorsehen, dass die Verbindungshülse 1 aus einem edleren Metall als der Rohrkörper 36 gefertigt ist oder umgekehrt. Eine besonders vorteilhafte Ausgestaltung der Zug-Druck-Stange 2 kann vorsehen, dass der Grundkörper der Verbindungshülse 1 aus Edelstahl und/oder Titan und der Rohrkörper 26 aus Aluminium gefertigt ist. Durch den Kontakt mit Feuchtigkeit käme es bei nicht abgedichteten Kontaktbereich 28 zu einer Korrosion des Gegenkupplungsabschnitt 27, was schließlich zu einer regelrechten Zersetzung des Rohrkörpers 26 und einer Aufhebung der Funktion der Zug-Druck-Stange 2 führt.

Ein maximaler Außendurchmesser 16 der zweiten Dichtung 7 ist breiter als ein minimaler Innendurchmesser 29 des Gegenkupplungsabschnitts 27 des Rohrkörpers 26 ausgebildet. Durch die wenigstens teilweise elastische Ausgestaltung der zweiten Dichtung 7, ist es dennoch möglich, die zweite Dichtung 7 während der Montage durch den Gegenkupplungsabschnitt 27 hindurchzuführen, indem die zweite Dichtung 7 beim Einführen in den Gegenkupplungsabschnitt 24 leicht verformt wird und dabei ihre lateralen Dichtflächen zusammengepresst werden.

Ein maximaler Außendurchmesser 16 der zweiten Dichtung 7 ist zudem breiter als ein Innendurchmesser 30 einer in Einführungsrichtung 32 dem Gegenkupplungsabschnitt 27 nachgelagerten Kernlochbohrung 31 des Rohrkörper 26 ausgestaltet.

Am Innenumfang des Rohrkörpers 26 ist ein Reibungsabschnitt 34 ausgebildet, welcher in Montagestellung wenigstens teilweise am zuvor genannten Verdrehsicherungsabschnitt 21 der Verbindungshülse 1 anliegt und die Verbindungshülse 1 gegen eine Verdrehung relativ zum Rohrkörper 26 durch eine Presspassung sichert. Ein maximaler Außendurchmesser 35 des Verdrehsicherungsabschnitts 21 ist größer als ein minimaler Innendurchmesser 36 des Reibungsabschnitts 34 ausgebildet.

Die Stirnfläche 37 am Rohrkörper 26 und/oder eine Anlagefläche der Hinterschneidung 19, die jeweils mit der ersten Dichtung 6 in Kontakt treten, um eine definierte Vorspannung auszubilden, sind gegenüber einer Längsachse 38 des Rohrkörpers 26 schräg ausgerichtet, insbesondere so dass die erste Dichtung 6 in Montagestellung dann nahezu formschlüssig verspannt ist. In Kombination mit dem sich in radialer Richtung nach außen hin verjüngenden Querschnitt 18 ersten Dichtung 6 kann somit eine noch bessere Abdichtung des Kontaktbereichs 28 erreicht werden, indem die schräggestellten Flächen den Dichtring 8 in Radialrichtung nach innen pressen.

Am Rohrkörper 26 ist ein Anschlag 39 ausgebildet, an welchem in Montagestellung ein an der Verbindungshülse 1 ausgebildeter Gegenanschlag 40 anliegt und durch welchen eine maximale Einsetztiefe der Verbindungshülse 1 in den Rohrkörper 26 und eine definierte Vorspannung der ersten Dichtung 6 festgelegt ist.

Um eine Verdrehsicherung der Verbindungshülse 1 innerhalb des Rohrkörpers 26 erreichen zu können, weist die Zug-Druck-Stange 2 ein Fixierungsmittel 41 auf, dass beispielsweise durch den Verdrehsicherungsabschnitt 21 und den Reibungsabschnitt 34 und/oder den Sicherungsring 22 und die Raststruktur 24 ausgebildet sein kann. Alternativ oder ergänzend dazu kann das Fixierungsmittel 41 auch als eine durch einen Klebstoff ausgebildete Verklebung der Verbindungshülse 1 mit dem Rohrkörper 26 ausgebildet sein. Insbesondere kann es sich dabei um einen anaerob aushärtenden Klebstoff handeln, der auch innerhalb eines hermetisch abgedichteten Kontaktbereichs 28 angeordnet sein kann.

An der offenen Seite des Grundkörpers 3 kann eine Werkzeugangriffsfläche 43 ausgebildet sein, mittels welcher die Verbindungshülse 1 einfacher in den Rohrkörper 26 einführbar, insbesondere einschraubbar ist. Der Teil des Grundkörpers 3, welcher die Kupplungsstelle 15 ausbildet, ragt aus dem Rohrkörper 26 heraus.

Die Ausgestaltungen betreffen also eine Verbindungshülse und eine Zug-Druck-Stange 2 mit wenigstens einer Verbindungshülse 1 mit einem Grundkörper 3, einem außenumfangseitig am Grundkörper 3 ausgebildeten oder angeordneten Kupplungsabschnitt 4 und einer Durchgangsbohrung 5, wobei die Zug-Druck-Stange 2 eine erste Dichtung 6 aufweist, die einen Spalt zwischen dem Grundkörper 3 und einem Rohrkörper 26 abdichtet, und wobei die Zug-Druck-Stange 2 eine wenigstens die Durchgangsbohrung 5 verschließende zweite Dichtung 7 aufweist, wobei der Rohrkörper 26 innenumfangseitig wenigstens einen zum Kupplungsabschnitt 4 der Verbindungshülse 1 korrespondierenden Gegenkupplungsabschnitt 27 aufweist, wobei die wenigstens eine Verbindungshülse 1 und der Rohrkörper 26 in einem durch den Kupplungsabschnitt 4 und den Gegenkupplungsabschnitt 27 ausgebildeten Kontaktbereich 28 in Montagestellung wenigstens teilweise direkt aneinander anliegen, und wobei der Kontaktbereich 28 nach außen durch die erste Dichtung 6 und die zweite Dichtung 7 abgedichtet ist, so dass keine Feuchtigkeit in den Kontaktbereich 28 gelangt.

### Bezugszeichenliste

- 1: Verbindungshülse
- 2: Zug-Druck-Stange
- 3: Grundkörper
- 4: Kupplungsabschnitt
- 5: Durchgangsbohrung
- 6: Erste Dichtung
- 7: Zweite Dichtung
- 8: Dichtring
- 9: Außenumfang des Körpers
- 10: Stopfen
- 11: Eingeführter Teil
- 12: Herausragender Teil
- 13: Erste Öffnung
- 14: Zweite Öffnung
- 15: Kupplungsstelle
- 16: maximaler Außendurchmesser der zweiten Dichtung
- 17: maximaler Außendurchmesser des Endabschnitts
- 18: Querschnitt der ersten Dichtung
- 19: Hinterschneidung
- 20: Außengewinde
- 21: Verdrehsicherungsabschnitt; Konus
- 22: Sicherungsring
- 23: Lasche
- 24: Raststruktur
- 25: Rändel
- 26: Rohrkörper
- 27: Gegenkupplungsabschnitt
- 28: Kontaktbereich
- 29: minimaler Innendurchmesser des Gegenkupplungsabschnitts
- 30: minimaler Innendurchmesser der Kernlochbohrung
- 31: Kernlochbohrung
- 32: Einführungsrichtung
- 33: Innengewinde
- 34: Reibungsabschnitt
- 35: maximaler Außendurchmesser des Verdrehsicherungsschnitts
- 36: minimaler Innendurchmesser des Reibungsabschnitts
- 37: Stirnfläche des Rohrkörpers
- 38: Längsachse des Rohrkörpers
- 39: Anschlag
- 40: Gegenanschlag
- 41: Fixierungsmittel
- 42: maximaler Außendurchmesser des Kupplungsabschnitts
- 43: Werkzeugangriff

## Patentansprüche

1. Verbindungshülse (1) geeignet zur Herstellung einer Zug-Druck-Stange (2), mit einem Grundkörper (3), einem außenumfangseitig am Grundkörper (3) ausgebildeten oder angeordneten Kupplungsabschnitt (4), einer Durchgangsbohrung (5) und einer wenigstens teilweise außenumfangseitig angeordneten ersten Dichtung (6), **dadurch gekennzeichnet, dass** die Verbindungshülse (1) eine wenigstens die Durchgangsbohrung (5) verschließende zweite Dichtung (7) aufweist, und dass die erste Dichtung (6) und die zweite Dichtung (7) wenigstens teilweise aus einem elastischen Material hergestellt sind.

2. Verbindungshülse (1) nach Anspruch 1, **dadurch gekennzeichnet, dass** die zweite Dichtung (7) als ein Stopfen (10) ausgebildet ist, der einen in die Durchgangsbohrung (5) eingeführten Teil (11) und einen aus der Durchgangsbohrung (5) herausragenden Teil (12) aufweist.

3. Verbindungshülse (1) nach einem der vorstehenden Ansprüche, **dadurch gekennzeichnet, dass** eine erste Öffnung (13) der Durchgangsbohrung (5) offen und eine zweite Öffnung (14) der Durchgangsbohrung (5) durch die zweite Dichtung (7) verschlossen ist, insbesondere wobei durch die erste Öffnung (13) ein Zugang zu einer, vorzugsweise innenumfangseitig ausgebildeten oder angeordneten Kupplungsstelle (15) ausgebildet ist.

4. Verbindungshülse (1) nach einem der vorstehenden Ansprüche, **dadurch gekennzeichnet, dass** ein maximaler Außendurchmesser (16) der zweiten Dichtung (7) größer als ein maximaler Außendurchmesser (17) eines Endabschnitts des Grundkörpers (3) ist, insbesondere in welchen die zweite Dichtung (7) wenigstens teilweise eingeführt ist.

5. Verbindungshülse (1) nach einem der vorstehenden Ansprüche, **dadurch gekennzeichnet, dass** die erste Dichtung (6) einen sich radial nach außen verjüngenden Querschnitt (18) aufweist, insbesondere dass die erste Dichtung (6) einen trapezförmigen Querschnitt (18) aufweist, wobei die erste Dichtung (6) in vorgespanntem Zustand wenigstens teilweise in einer am Grundkörper (3) ausgebildeten Hinterschneidung (19) einklemmbar oder eingeklemmt ist

6. Verbindungshülse (1) nach einem der vorstehenden Ansprüche, **dadurch gekennzeichnet, dass** der Kupplungsabschnitt (4) wenigstens teilweise als ein Außengewinde (20) ausgebildet ist.

7. Zug-Druck-Stange (2) mit wenigstens einer Verbindungshülse (1) nach einem der vorstehenden Ansprüche und einem Rohrkörper (26), der innenumfangseitig wenigstens einen zum Kupplungsabschnitt (4) der Verbindungshülse (1) korrespondierenden Gegenkupplungsabschnitt (27) aufweist, wobei die wenigstens eine Verbindungshülse (1) und der Rohrkörper (26) in einem durch den Kupplungsabschnitt (4) und den Gegenkupplungsabschnitt (27) gebildeten Kontaktbereich (28) in Montagestellung miteinander in Kontakt treten, **dadurch gekennzeichnet, dass** der Kontaktbereich (28) nach außen abgedichtet ist, dass die Abdichtung des Kontaktbereichs (28) durch die erste Dichtung (6) und die zweite Dichtung (7) erfolgt.

8. Zug-Druck-Stange (2) nach Anspruch 7, **dadurch gekennzeichnet, dass** ein maximaler Außendurchmesser (16) der zweiten Dichtung (7) breiter als ein minimaler Innendurchmesser (29) des Gegenkupplungsabschnitts (27) des Rohrkörpers (26) und/oder als ein Innendurchmesser (30) einer in Einführungsrichtung (32) der Verbindungshülse (1) in den Rohrkörper (26) dem Gegenkupplungsabschnitt (27) nachgelagerten Kernlochbohrung (31) des Rohrkörpers (26) ausgestaltet ist.

9. Zug-Druck-Stange (2) nach einem der vorstehenden Ansprüche, **dadurch gekennzeichnet, dass** der Gegenkupplungsabschnitt (27) wenigstens teilweise als ein Innengewinde (33) ausgebildet ist.

10. Zug-Druck-Stange (2) nach einem der vorstehenden Ansprüche, **dadurch gekennzeichnet, dass** die erste Dichtung (6) in Montagestellung zwischen einer oder der Hinterschneidung (19) der Verbindungshülse (1) und einer Stirnfläche (37) des Rohrkörpers (26) eingeklemmt ist, insbesondere wobei die Stirnfläche (37) wenigstens teilweise schräg zu einer Längsachse (38) des Rohrkörpers (26) ausgerichtet ist.

11. Zug-Druck-Stange (2) nach einem der vorstehenden Ansprüche, **dadurch gekennzeichnet, dass** der Rohrkörper (26) einen Anschlag (39) aufweist, an welchem in Montagestellung ein an der Verbindungshülse (1) ausgebildeter Gegenanschlag (40) anliegt und/oder durch welchen eine maximale Einsetztiefe der Verbindungshülse (1) in den Rohrkörper (26) und/oder eine Vorspannung der ersten Dichtung (6) definiert ist.

12. Zug-Druck-Stange (2) nach einem der vorstehenden Ansprüche, **dadurch gekennzeichnet, dass** die wenigstens eine Verbindungshülse (1) durch ein Fixierungsmittel (41) fest, insbesondere kraftschlüssig und/oder formschlüssig und/oder stoffschlüssig, mit dem Rohrkörper (26) verbunden ist, insbesondere derart, dass keine Bewegung der Verbindungshülse (1) relativ zum Rohrkörper (26) möglich ist.

13. Verwendung einer Verbindungshülse (1) nach einem der vorstehenden Ansprüche 1 bis 6 zur Herstellung einer Zug-Druck-Stange (2), insbesondere nach einem der vorstehenden Ansprüche 7 bis 12.

14. Verfahren zur Herstellung einer Zug-Druck-Stange (2) nach einem der vorstehenden Ansprüche 7 bis 12, wobei eine Verbindungshülse (1) nach einem der vorstehenden Ansprüche 1 bis 6 in einer Einführungsrichtung (32) in den Rohrkörper (26) eingesetzt und mit diesem fest verbunden wird **dadurch gekennzeichnet, dass** die erste Dichtung (6) den Kontaktbereich (28) an einer dem Kontaktbereich (28) in Einführungsrichtung (32) vorgelagerter Stelle abdichtet, dass die zweite Dichtung (7) beim Einführen der Verbindungshülse (1) in den Rohrkörper (26) durch den innenumfangseitig am Rohrkörper (26) ausgebildeten Gegenkupplungsabschnitt (27) hindurchgeführt wird, und dass durch die zweite Dichtung (7) eine Abdichtung des Kontaktbereichs (28) an einer dem Kontaktbereich (28) in Einführungsrichtung (32) nachgelagerten Stelle erfolgt.

15. Verwendung einer Zug-Druck-Stange (2) nach einem der vorstehenden Ansprüche 7 bis 12 als Bauteil in einem Flugzeug.

## Claims

1. Connecting sleeve (1) suitable for the production of a push-pull link bar (2), with a main body (3), a coupling section (4) which is configured or arranged on the outer circumferential side of the main body (3), a through bore (5) and a first seal (6) which is arranged at least partially on the outer circumferential side, **characterized in that** the connecting sleeve (1) has a second seal (7) which closes at least the through bore (5), and **in that** the first seal (6) and the second seal (7) are produced at least partially from an elastic material.

2. Connecting sleeve (1) according to Claim 1, **characterized in that** the second seal (7) is configured as a plug (10) which has one part (11) which is introduced into the through bore (5) and one part (12) which protrudes out of the through bore (5).

3. Connecting sleeve (1) according to either of the preceding claims, **characterized in that** a first opening (13) of the through bore (5) is open, and a second opening (14) of the through bore (5) is closed by way of the second seal (7), an access to a coupling point (15) which is preferably configured or arranged on the inner circumferential side being configured, in particular, by way of the first opening (13).

4. Connecting sleeve (1) according to one of the preceding claims, **characterized in that** a maximum external diameter (16) of the second seal is greater than a maximum external diameter (17) of an end section of the main body (3), in particular into which the second seal (7) is introduced at least partially.

5. Connecting sleeve (1) according to one of the preceding claims, **characterized in that** the first seal (6) has a radially outwardly tapering cross section (18), and, in particular, **in that** the first seal (6) has a trapezoidal cross section (18), the first seal (6) being clamped or being capable of being clamped in the prestressed state at least partially in an undercut (19) which is configured on the main body (3).

6. Connecting sleeve (1) according to one of the preceding claims, **characterized in that** the coupling section (4) is configured at least partially as an external thread (20).

7. Push-pull link bar (2) with at least one connecting sleeve (1) according to one of the preceding claims and a tubular body (26) which, on the inner circumferential side, has at least one mating coupling section (27) which corresponds to the coupling section (4) of the connecting sleeve (1), the at least one connecting sleeve (1) and the tubular body (26) coming into contact with one another in the mounting position in a contact region (28) which is formed by way of the coupling section (4) and the mating coupling section (27), **characterized in that** the contact region (28) is sealed towards the outside, and **in that** the sealing action of the contact region (28) takes place by way of the first seal (6) and the second seal (7).

8. Push-pull link bar (2) according to Claim 7, **characterized in that** a maximum external diameter (16) of the second seal (7) is of wider configuration than a minimum internal diameter (29) of the mating coupling section (27) of the tubular body (26) and/or than an internal diameter (30) of a core drilled bore (31) of the tubular body (26), which core drilled bore (31) is arranged downstream of the mating coupling section (27) in the introduction direction (32) of the connecting sleeve (1) into the tubular body (26).

9. Push-pull link bar (2) according to one of the preceding claims, **characterized in that** the mating coupling section (27) is configured at least partially as an internal thread (33).

10. Push-pull link bar (2) according to one of the preceding claims, **characterized in that**, in the mounting position, the first seal (6) is clamped in between an or the undercut (19) of the connecting sleeve (1) and an end face (37) of the tubular body (26), the end face (37) being oriented, in particular, at least partially obliquely with respect to a longitudinal axis (38) of the tubular body (26).

11. Push-pull link bar (2) according to one of the preceding claims, **characterized in that** the tubular body (26) has a stop (39), against which, in the mounting position, a counterstop (40) which is configured on the connecting sleeve (1) bears, and/or by way of which stop (39) a maximum insertion depth of the connecting sleeve (1) into the tubular body (26) and/or a prestress of the first seal (6) are/is defined.

12. Push-pull link bar (2) according to one of the preceding claims, **characterized in that** the at least one connecting sleeve (1) is connected to the tubular body (26) fixedly, in particular in a non-positive and/or positively locking and/or integrally joined manner, by way of a fixing means (41), in particular in such a way that a movement of the connecting sleeve (1) relative to the tubular body (26) is not possible.

13. Use of a connecting sleeve (1) according to one of the preceding Claims 1 to 6 for the production of a push-pull link bar (2), in particular according to one of the preceding Claims 7 to 12.

14. Method for the production of a push-pull link bar (2) according to one of the preceding Claims 7 to 12, a connecting sleeve (1) according to one of the preceding Claims 1 to 6 being inserted in an introduction direction (32) into the tubular body (26) and being connected fixedly to the latter, **characterized in that** the first seal (6) seals the contact region (28) at a position which is arranged upstream of the contact region (28) in the introduction direction (32), **in that**, when the connecting sleeve (1) is introduced into the tubular body (26), the second seal (7) is guided through the mating coupling section (27) which is configured on the inner circumferential side of the tubular body (26), and **in that** a sealing action of the contact region (28) at a position which is arranged downstream of the contact region (28) in the introduction direction (32) takes place by way of the second seal (7).

15. Use of a push-pull link bar (2) according to one of the preceding Claims 7 to 12 as a component in an aircraft.

## Revendications

1. Douille de raccordement (1) appropriée pour la fabrication d'une barre de traction-compression (2), comprenant un corps de base (3), une section d'accouplement (4) réalisée ou disposée sur la périphérie extérieure du corps de base (3), un orifice de passage (5) et un premier joint d'étanchéité (6) qui est disposé au moins en partie sur la périphérie extérieure, **caractérisée en ce que** la douille de raccordement (1) présente un deuxième joint d'étanchéité (7) qui referme au moins l'orifice de passage (5), et **en ce que** le premier joint d'étanchéité (6) et le deuxième joint d'étanchéité (7) sont fabriqués au moins en partie en un matériau élastique.

2. Douille de raccordement (1) selon la revendication 1, **caractérisée en ce que** le deuxième joint d'étanchéité (7) est réalisé sous la forme d'un bouchon (10) qui présente une partie (11) introduite dans l'orifice de passage (5) et une partie (12) qui fait saillie à l'extérieur de l'orifice de passage (5).

3. Douille de raccordement (1) selon l'une quelconque des revendications précédentes, **caractérisée en ce qu'**une première ouverture (13) de l'orifice de passage (5) est ouverte et une deuxième ouverture (14) de l'orifice de passage (5) est refermée par le deuxième joint d'étanchéité (7), un accès à un point d'accouplement (15) réalisé ou disposé de préférence sur la périphérie intérieure étant réalisé en particulier à travers la première ouverture (13).

4. Douille de raccordement (1) selon l'une quelconque des revendications précédentes, **caractérisée en ce qu'**un diamètre extérieur (16) maximal du deuxième joint d'étanchéité (7) est supérieur à un diamètre extérieur (17) maximal d'une section d'extrémité du corps de base (3), en particulier dans lequel le deuxième joint d'étanchéité (7) est au moins en partie introduit.

5. Douille de raccordement (1) selon l'une quelconque des revendications précédentes, **caractérisée en ce que** le premier joint d'étanchéité (6) présente une section transversale (18) qui s'amincit radialement vers l'extérieur, en particulier **en ce que** le premier joint d'étanchéité (6) présente une section transversale trapézoïdale (18), le premier joint d'étanchéité (6) pouvant être ou étant, à l'état précontraint, au moins en partie serré dans une contre-dépouille (19) qui est pratiquée sur le corps de base (3).

6. Douille de raccordement (1) selon l'une quelconque des revendications précédentes, **caractérisée en ce que** la section d'accouplement (4) est réalisée au moins en partie sous la forme d'un filetage extérieur (20).

7. Barre de traction-compression (2) comprenant au moins une douille de raccordement (1) selon l'une quelconque des revendications précédentes et un corps tubulaire (26) qui présente sur sa périphérie intérieure au moins une section de contre-accouplement (27) qui correspond à la section d'accouplement (4) de la douille de raccordement (1), ladite au moins une douille de raccordement (1) et le corps tubulaire (26) étant, dans la position de montage, en contact l'un avec l'autre dans une zone de contact (28) qui est formée par la section d'accouplement (4) et la section de contre-accouplement (27), **caractérisée en ce que** la zone de contact (28) est rendue étanche vers l'extérieur, et **en ce que** le premier joint d'étanchéité (6) et le deuxième joint d'étanchéité (7) assurent l'étanchéité de la zone de contact (28).

8. Barre de traction-compression (2) selon la revendication 7, **caractérisée en ce qu'**un diamètre extérieur (16) maximal du deuxième joint d'étanchéité (7) est plus large qu'un diamètre intérieur (29) minimal de la section de contre-accouplement (27) du corps tubulaire (26) et/ou se présente sous la forme d'un diamètre intérieur (30) d'un trou à noyau (31) du corps tubulaire (26) qui est formé en aval de la section de contre-accouplement (27) dans la direction d'introduction (32) de la douille de raccordement (1) à l'intérieur du corps tubulaire (26).

9. Barre de traction-compression (2) selon l'une quelconque des revendications précédentes, **caractérisée en ce que** la section de contre-accouplement (27) se présente au moins en partie sous la forme d'un filetage intérieur (33).

10. Barre de traction-compression (2) selon l'une quelconque des revendications précédentes, **caractérisée en ce que** le premier joint d'étanchéité (6), dans la position de montage, est serré entre une ou la contre-dépouille (19) de la douille de raccordement (1) et une face frontale (37) du corps de base (26), la face frontale (37) étant en particulier orientée au moins en partie de manière oblique par rapport à un axe longitudinal (38) du corps tubulaire (26).

11. Barre de traction-compression (2) selon l'une quelconque des revendications précédentes, **caractérisée en ce que** le corps tubulaire (26) présente une butée (39) sur laquelle s'applique, dans la position de montage, une contrebutée (40) qui est réalisée sur la douille de raccordement (1) et/ou par laquelle est définie une profondeur d'insertion maximale de la douille de raccordement (1) à l'intérieur du corps tubulaire (26) et/ou une précontrainte du premier joint d'étanchéité (6).

12. Barre de traction-compression (2) selon l'une quelconque des revendications précédentes, **caractérisée en ce que** ladite au moins une douille de raccordement (1) est reliée de manière fixe au corps tubulaire (26) par l'intermédiaire d'un moyen de fixation (41), en particulier à force, et/ou par complémentarité de forme et/ou par liaison de matière, en particulier de telle sorte qu'aucun mouvement de la douille de raccordement (1) par rapport au corps tubulaire (26) ne soit possible.

13. Utilisation d'une douille de raccordement (1) selon l'une quelconque des revendications précédentes 1 à 6 pour la fabrication d'une barre de traction-compression (2), en particulier selon l'une quelconque des revendications précédentes 7 à 12.

14. Procédé pour la fabrication d'une barre de traction-compression (2) selon l'une quelconque des revendications précédentes 7 à 12, une douille de raccordement (1) selon l'une quelconque des revendications précédentes 1 à 6 étant insérée à l'intérieur du corps de base (26) dans une direction d'introduction (32) et reliée de manière fixe à celui-ci, **caractérisé en ce que** le premier joint d'étanchéité (6) assure l'étanchéité de la zone de contact (28) au niveau d'un point qui est situé en amont de la zone de contact (28) dans la direction d'introduction (32), **en ce que**, lors de l'introduction de la douille de raccordement (1) à l'intérieur du corps tubulaire (26), on fait passer le deuxième joint d'étanchéité (7) à travers la section de contre-accouplement (27) réalisée sur la périphérie intérieure du corps tubulaire (26), et **en ce que** le deuxième joint d'étanchéité (7) assure une étanchéité de la zone de contact (28) au niveau d'un point qui est situé en aval de la zone de contact (28) dans la direction d'introduction (32).

15. Utilisation d'une barre de traction-compression (2) selon l'une quelconque des revendications 7 à 12 en tant que composant dans un aéronef.
